Europäisches Patentamt

European Patent Office

Office européen des brevets

(19)

(11) Publication number: **0 228 644 B1**

## EUROPEAN PATENT SPECIFICATION

(12)

(45) Date of publication of patent specification: **25.09.91**  (51) Int. Cl.⁵: **G01N 17/02**

(21) Application number: **86117476.1**

(22) Date of filing: **16.12.86**

(54) Method for detection of materials degradation of alloy steels after long service operation.

(30) Priority: **20.12.85 JP 285600/85**

(43) Date of publication of application:
**15.07.87 Bulletin 87/29**

(45) Publication of the grant of the patent:
**25.09.91 Bulletin 91/39**

(84) Designated Contracting States:
**DE**

(56) References cited:
**EP-A- 0 070 124**
**EP-A- 0 084 404**
**US-A- 4 518 464**

(73) Proprietor: **President of Tohoku University**
**1-1, 2-chome, Katahira**
**Sendai-shi Miyagi-ken(JP)**

Proprietor: **IDEMITSU KOSAN COMPANY**
**LIMITED**
**1-1, Marunouchi 3-chome Chiyoda-ku**
**Tokyo(JP)**

(72) Inventor: **Takahashi, Hideaki**
**30-11, 1-chome, Kongozawa**
**Sendai-shi Miyagi-ken(JP)**
Inventor: **Shoji, Tetsuo**
**No. 21-3, Yamate-cho**
**Sendai-shi Miyagi-ken(JP)**
Inventor: **Yaegashi, Akira c/o Idemitsu Kosan**
**Company Ltd.**
**1-1, 3-chome, Marunouchi**
**Chiyoda-ku Tokyo(JP)**

(74) Representative: **Gille, Christian, Dipl.-Ing. et al**
**Türk, Gille + Hrabal Patentanwälte Bruckner**
**Strasse 20**
**W-4000 Düsseldorf 13(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of determining a degree of deterioration of alloy steel embrittled in a high temperature atmosphere over a long period of time, whereby a degree of deterioration in characteristics with a lapse of time of various thermal resistant alloy steels which are used at high temperatures can be judged non- destructively and further with high accuracy, according to patent claim 1.

Various alloy steels exhibiting excellent mechanical properties at temperatures as high as 300 to 600°C, such as a chromium-molybdenum steel are widely used as structural materials such as reactors, heat exchangers, columns and vessels for chemical plants, pipings such as furnace tubes, and generator materials such as rotors and casings of turbines in various industrial fields exemplified by chemical industry such as petroluem refinery.

It is known that the above structural materials are sometimes subject to changes in characteristics when used for a long time at elevated temperatures. These changes in properties can be divided into two groups: embrittlement and softening. If the embrittlement, in particular, occurs, the toughness of the material is reduced and this reduction in toughness may lead to damage of alloy steels constituting the structural material.

For this reason, it is necessary for alloy steels used as a structural material at high temperatures to be examined or evaluated at predetermined intervals.

Many methods are known which concern detecting embrittlements, corrosion or damages in metal structures.

For judgement of embrittlement of structural materials, a method has been established in which a shift of fracture appearance transition temperature ($\Delta$ FATT) is measured by the Charpy impact tests and based on this $\Delta$ FATT, the degree of embrittlement is judged. Although this method is of high precision and of high reliability, it is required for a part of the structural material to be cut away for the testing. Therefore, if the method is used for judgement of embrittlement of a structural material from which a limited number of test pieces can be obtained, it cannot exhibit high precision and high reliability. Accordingly the method is unsuitable for practical use.

It is known from EP-A 0 084 404 to use a metal part to be examined as a first electrode in an electrolyte surrounding and observe the low frequency voltage, which is a noise signal, in relation to a second electrode also contacting the electrolyte. Amplitude values of the signal are measured and subjected to an averaging computation which consists in spectrally analyzing the low frequency voltage noise signal, yielding data indicating the corrosion rate of the first electrode and the nature of the corrosion. By this method qualitative results can be obtained which are in many cases sufficiant for the user, however, materials which are used over a long period of time require quantitative results so that the remaining life-time of an apparatus or the like may be reliably estimated.

A method of detecting and quantifying damage in metal structures is disclosed in EP-A 0 070 124. The metal structure to be monitored and at least one reference electrode are immersed in an electrolyte having properties which cause passivation of the immersed surface of the metal structure and at least a partial depassivation thereof when a flow of current to the passivated surface is established. This may occur by exposure of non-passivated surface in the event of surface damages, strain or crack. Accordingly, this method is suitable for damages which exposes fresh surface, but not for embrittled materials subjected to thermal loads which never show the required fresh surface.

Another method, also on basis of the repassivation current value, which is suitable for detecting embrittlement of a heat-resisting steel, is described in US-A 4,518,464. This repassivation current value, appearing when an anode potential is once increased up to a passive region - when a passive film is formed on the anode - and thereafter is again lowered is intimately related to the presence or absence of temper brittleness. If this method is carried out on different test pieces, the respective repassivation current density can be related to the fracture appearance transition temperature in order to determining the degree of embrittlement. However, accuracy is highly dependent of precisely determining the area of the passive region, so the method seems not to be too reliable for quantitative results if high accuracy is required.

It is the object of the invention to provide a testing method whereby a degree of deterioration in characteristics with time of an alloy steel can be judged non-destructively with high precision and accuracy.

This object is achieved by a method according to patent claim 1 and is best fitted to materials according to claim 2.

It has been found that a degree of deterioration in characteristics with time of an alloy steel can be determined by measuring a change in corrosion potential of the structural material.

The present invention relates to a method of testing deterioration with time of an alloy steel used at high temperatures which comprises measuring changes in corrosion potential of the alloy steel and judging a degree of deterioration with time of the alloy steel based on the changes in corrosion potential.

Fig. 1 is an illustrative view of an apparatus for measuring changes in corrosion potential with time of an alloy steel;

Fig. 2 is a graph showing changes in corrosion potential with time of an embrittled material of Example 1;

Fig. 3 is a graph showing changes in corrosion potential with time of a de-embrittled material of Example 1;

Fig. 4 is a graph showing changes in corrosion potential with time as obtained in Example 2;

Fig. 5 is a graph showing changes in corrosion potential with time as obtained in Example 3;

Fig. 6 is a graph showing changes in corrosion potential with time of an embrittle material of Example 4;

Fig. 7 is a graph showing the results of a spectral analysis as to the changes of the embrittled material of Example 4;

Fig. 8 is a graph showing changes in corrosion potential with time of a de-embrittled material of Example 4;

Fig. 9 is a graph showing the results of a spectrum analysis as to the changes of the de-embrittled material of Example 4;

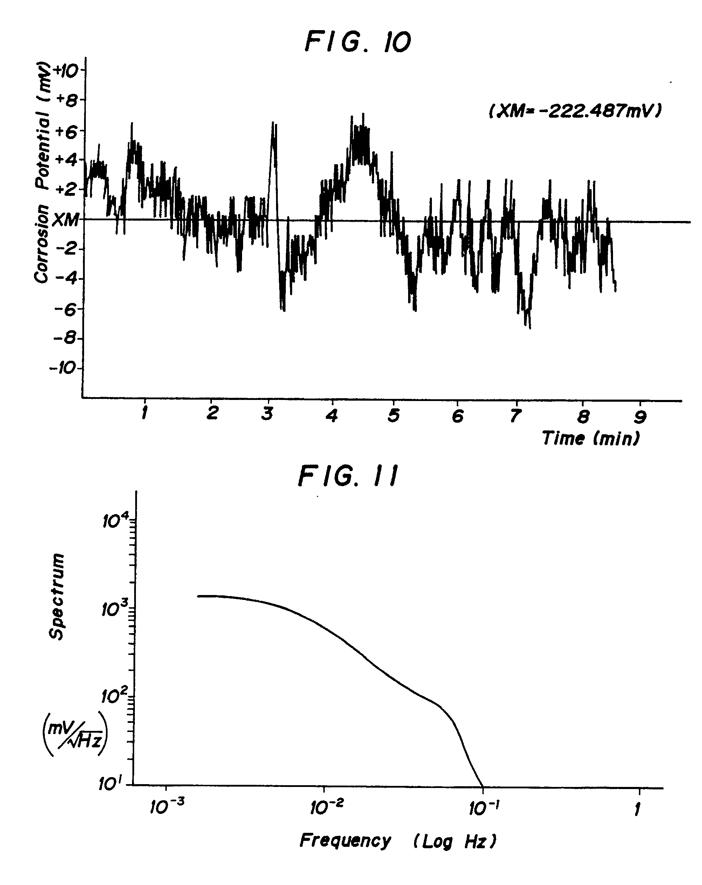

Fig. 10 is a graph showing changes in corrosion potential with time of an embrittled material of Example 5;

Fig. 11 is a graph showing the results of a spectrum analysis as to the changes of the embrittled material of Example 5;

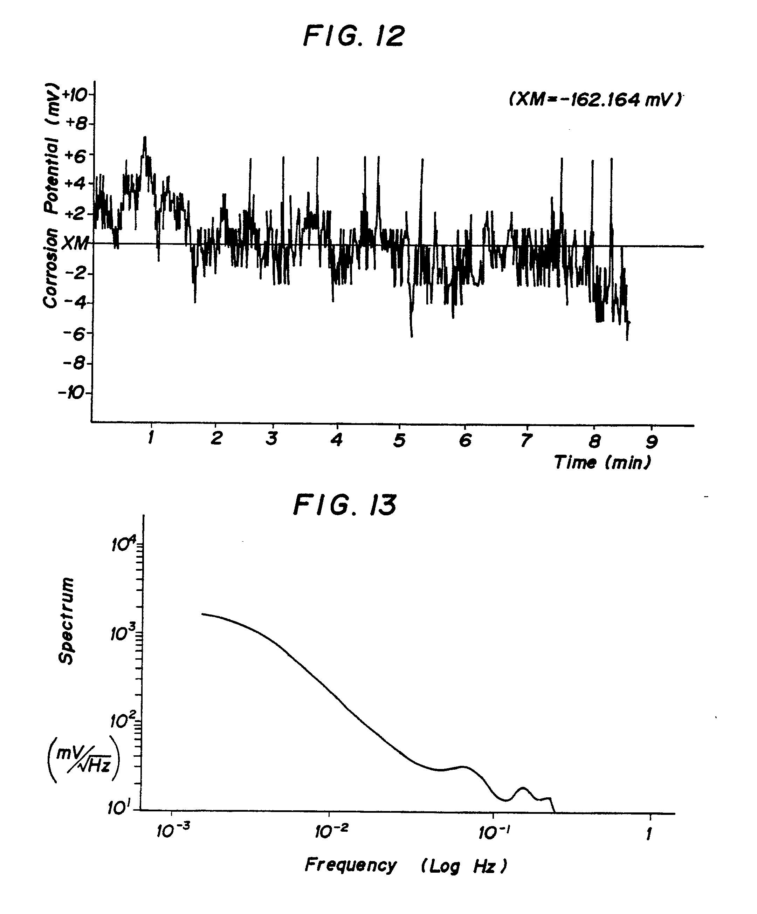

Fig. 12 is a graph showing changes in corrosion potential with time of a sound material of Example 5;

Fig. 13 is a graph showing the results of a spectral analysis as to the changes of the sound material of Example 5; and

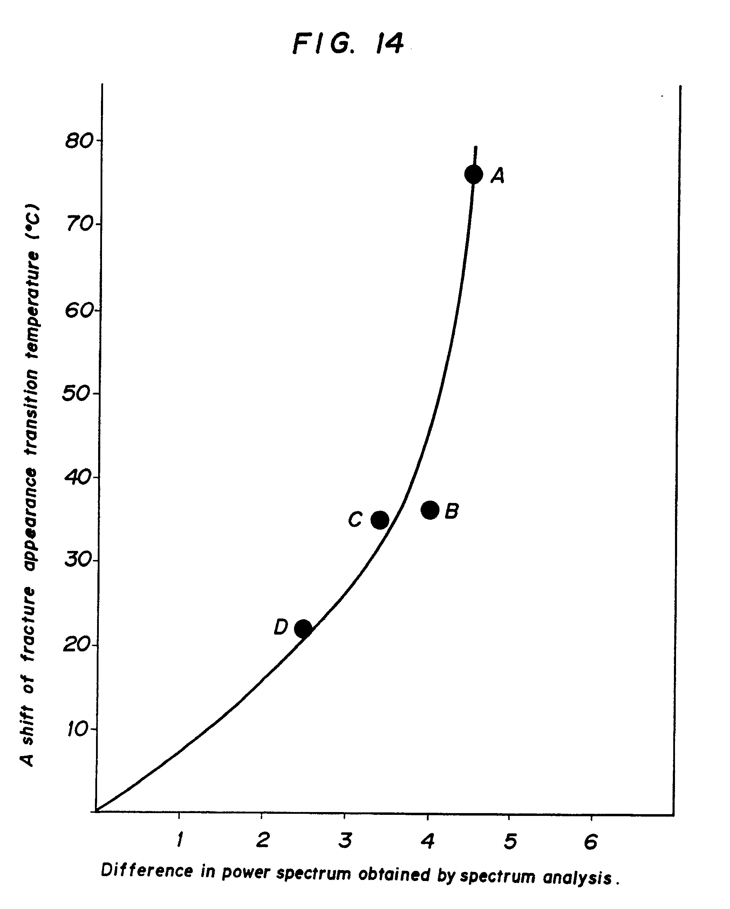

Fig. 14 is a graph showing a relation between a shift of fracture appearance transition temperature ($\Delta$ FATT) and a difference in power spectrum measured from area by a spectrum analysis.

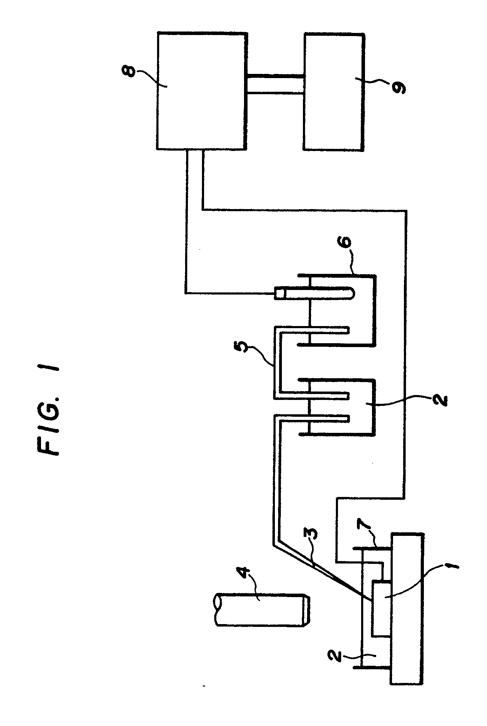

In Figure 1, 1 indicates a test piece; 2, an electrolyte; 3, a micro luggin capillary; 4, a binocular microscope; 5, a salt bridge; 6, a reference electrode; 7, a glass cell; 8, an electric potentiometer; and 9, a recorder.

## DETAILED DESCRIPTION OF THE INVENTION

Material deterioration in toughness properties of various alloy steels can be measured in accordance with the present invention. Typical examples of alloy steels the deterioration toughness properties with time of which can be measured by the testing method of the present invention are low alloy steels such as a chromium-molybdenum steel and a chromium-molybdenum-vanadium steel, and high alloy steels such as a stainless steel.

In accordance with the testing method of the present invention, an alloy steel which is considered to have undergone serious embrittlement (deterioration) as a result of use at high temperatures is measured for changes in corrosion potential with time thereof. In measuring the corrosion potential of the alloy steel, a calomel electrode or a silver/silver chloride electrode, for example, is used as a reference electrode, an alloy steel to be measured is dipped in an electrolyte and used as a working electrode, and an electric potential between the electrodes is measured with that of the reference electrode as a base.

The electrolyte in which the alloy steel is dipped is selected from those electrolytes exhibiting selective corrosiveness to an embrittle part of the alloy steel. More specifically, for a chromium-molybdenum steel and a chromium-molybdenum-vanadium steel, electrolytes acting as an oxidizing agent, such as an alcohol containing 1 to 10 vol% of nitric acid (Nital), Villela solution prepared by mixing a 1 to 10 vol% aqueous solution of nitric acid or hydrochloric acid, nitric acid and glycerine, although the optimum electrolyte varies depending on the type of the alloy steel used.

The corrosion potential of an alloy steel is determined by measuring with the reference electrode as a base. It is preferred that as a capillary tube of the reference electrode, a micro luggin capillary having a tip diameter of not more than 100 $\mu$m, preferably 5 to 50 $\mu$m is used and the corrosion potential is measured with time in such a manner that the micro capillary is placed at as near a position as possible to the test piece (alloy steel to be tested), because the dissolution behavior of the surface of the alloy steel can be precisely understood as changes in corrosion potential of the alloy steel.

As a degree of embrittlement is greater, a change in corrosion potential is higher. Therefore, by analyzing the state of change in corrosion potential, a degree of embrittlement of an alloy steel can be immediately determined. Thus, in the present invention, the change in corrosion potential is used as an index for a degree of embrittlement. Furthermore, the different behavior of fluctuation in corrosion potential has been recognized to have a close relation with a shift of fracture appearance transition temperature ($\Delta$ FATT) as obtained by the Charpy impact tests. Accordingly, since $\Delta$ FATT is recognized to have high reliability as an index showing the deterioration in characteristics with time of a structural material, the judgement of deterioration in characteristics with time can be carried out with high reliability even by analysing behavior of fluctuation in corrosion potential as an index.

The corrosion potential of an alloy steel which has been seriously deteriorated is greater in the amplitude of change as compared with that of an alloy steel which has not been deteriorated. In addition, the corrosion potential of the former alloy steel is greater in the change with time from several minutes to ten minutes as compared with that of the latter alloy steel.

A degree of deterioration of an alloy steel can be determined quantitatively and precisely by spectrum analysis of the fluctuation in corrosion potential of the alloy steel as measured above by the use of techniques such as the maximum entropy method (MEM) or Fast Fourier Transformation (FFT).

In accordance with the testing method of the present invention, a degree of deterioration in toughness characteristics with time of various alloy steels such as a chromium-molybdenum steel can be determined non-destructively with high reliability, high sensitivity and high accuracy. Furthermore, an electrolyte to be used in the testing method can be easily prepared. Moreover, a degree of embrittlement can be determined in a short time and further by a simplified testing operation.

Accordingly, in accordance with the testing method of the present invention, a degree of deterioration in toughness characteristics with time of various alloy steels which are used as various industrial structural materials of e.g., chemical plants can be determined with high accuracy. Thus the testing method of the present invention provides valuable data for evaluation of the life of structural materials, selection of operation conditions and so forth.

The present invention is described in greater detail with reference to the following examples.

EXAMPLE I

Turbine Roter Steel subjected to Tempering Embrittlement

A test piece of ICr-IMo-I/4V was measured for changes in corrosion potential with time using a 5% Nital (ethanol containing 5 vol% of nitric acid) as the electrolyte 2 and a measuring apparatus shown in Fig. I.

As a sample electrode, surface (I cm × I cm) of a Charpy test piece I was used. Leadwire was connected to the side of the test piece I with an epoxy resin. The leadwire was coated with Araldite. The surface of the test piece I, which was to be measured, were polished with Emery paper, degreased with acetone and used for the test. A micro capillary 3 was produced by drawing a double concentric pipe (outer diameter: I.5 mm; inner diameter: 0.8 mm) while heating with a burner. The inner diameter of the tip of the micro capillary 3 was about I0 to 20 μm. The micro capillary was moved by the use of a 3-axis manipulator (produced by Sigemori Kagaku Co., Ltd.) while observing under a binocular microscope 4. The micro capillary 3 was connected to a saturated calomel electrode 6 as a reference electrode through a salt bridge 5. The distance between the tip of the micro capillary 3 and the surface to be measured of the test piece I was about 0.I mm.

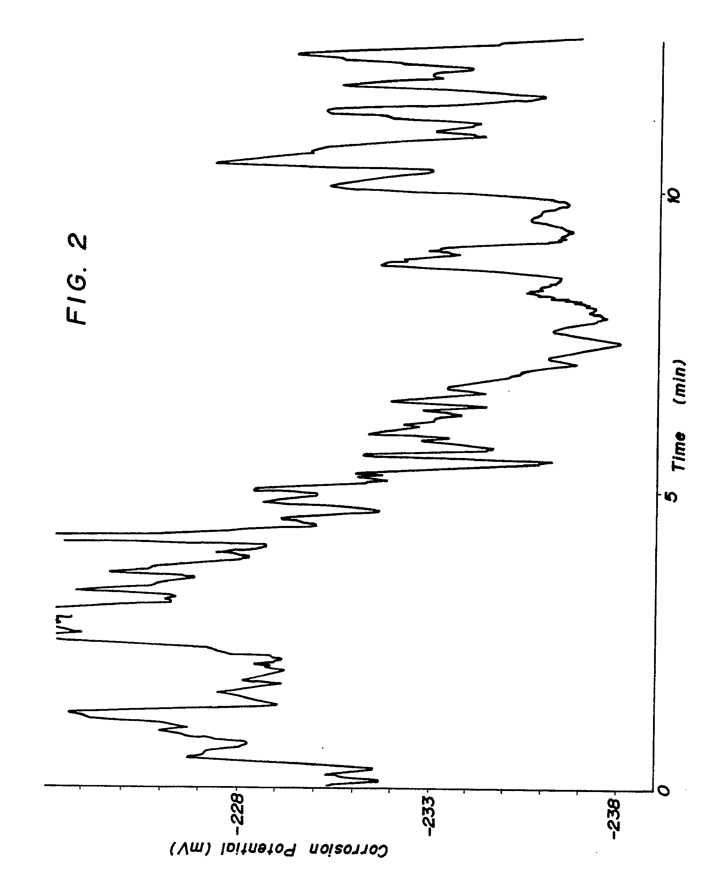

Fluctuation in corrosion potential with time of the test piece as measured under the above conditions are shown in Fig. 2.

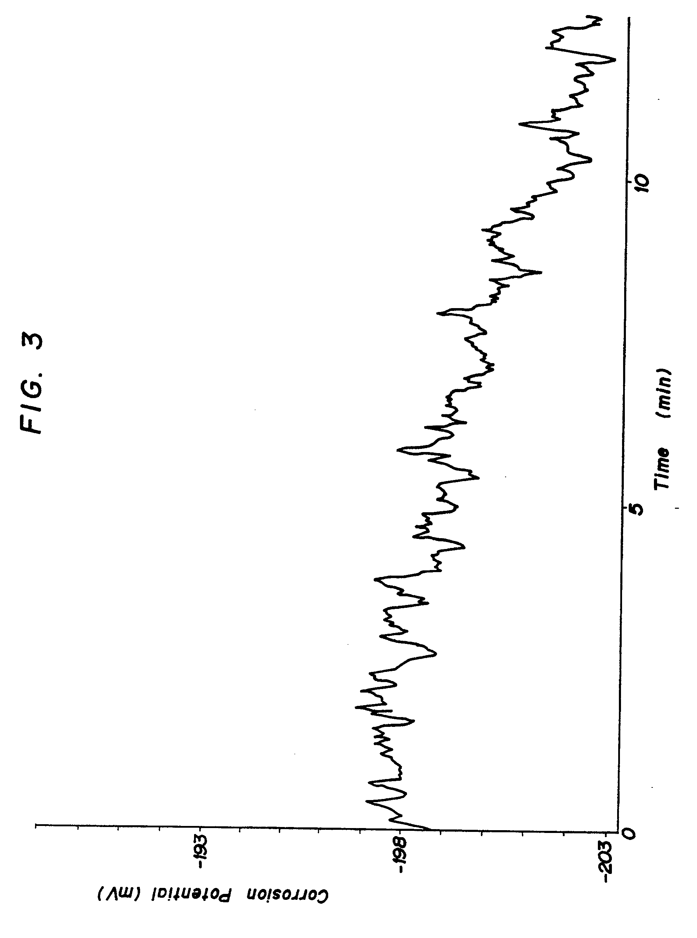

For comparison, a turbine roter steel subjected to de-embrittled treatment (corresponding to a sound material) was measured for changed in corrosion electrode in the same manner as above. The results are shown in Fig. 3.

Fig. 2 shows that the corrosion potential of the test piece undergone embrittlement greatly varies, the difference between the maximum and minimum potentials was about I5 mV, and noises having a small amplitude and a high frequency were observed. On the other hand, it can be seen from Fig. 3 that in the test piece subjected to de-embrittlement, the difference between the maximum and minimum potentials was only about 6 mV although the variation in corrosion potential was observed, and furthermore unexpected big noises were not formed.

EXAMPLE 2

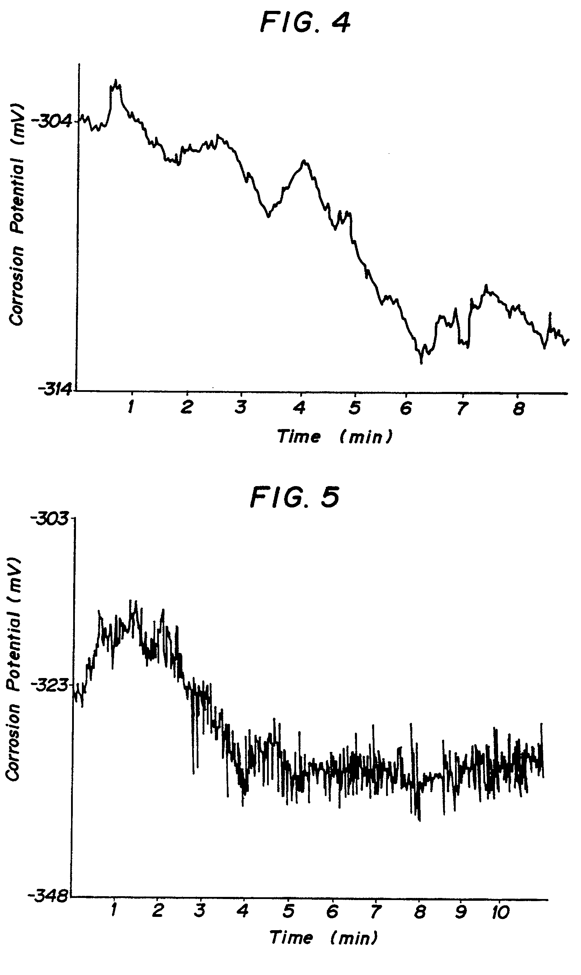

Fluctuation in corrosion potential with time of the test piece were measured in the same manner as in Example I except that a 5 vol% aqueous solution of nitric acid was used in place of the 5% Nital as the electrolyte 2. The results are shown in Fig. 4.

EXAMPLE 3

Fluctuation in corrosion potential with time of the test piece were measured in the same manner as in Example I except that a Villela solution (40 vol% hydrochloric acid, 20 vol% nitric acid, 40 vol% glycerine) was used in place of the 5% Nital as the electrolyte 2. The results are shown in Fig. 5.

EXAMPLE 4

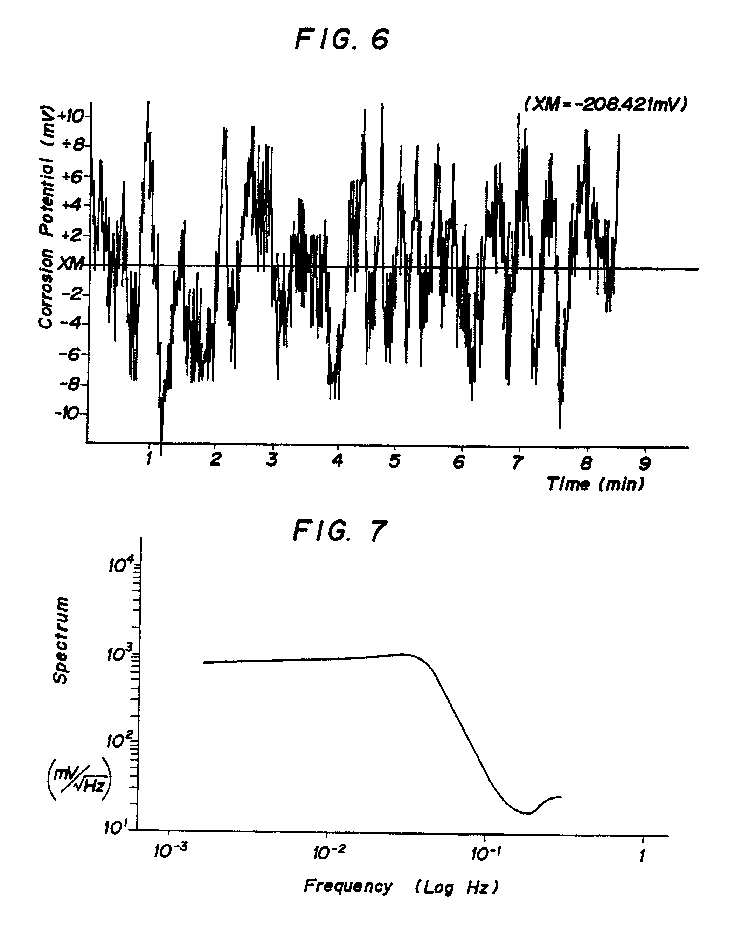

Fluctuation in corrosion potential with time were measured in the same manner as in Example I except that a I I/4Cr-I/2 Mo steel used for I4 years at 540° C was used as the test piece. The results are shown in Fig. 6 (maximum potential: -I95.36 mV; minimum potential: -222.222 mV). These fluctuation in corrosion potential with time were processed according to the maximum entropy method by the use of a personel computer (NEC980I F2) and spectrum analysis was performed. Analysis results are shown in Fig. 7.

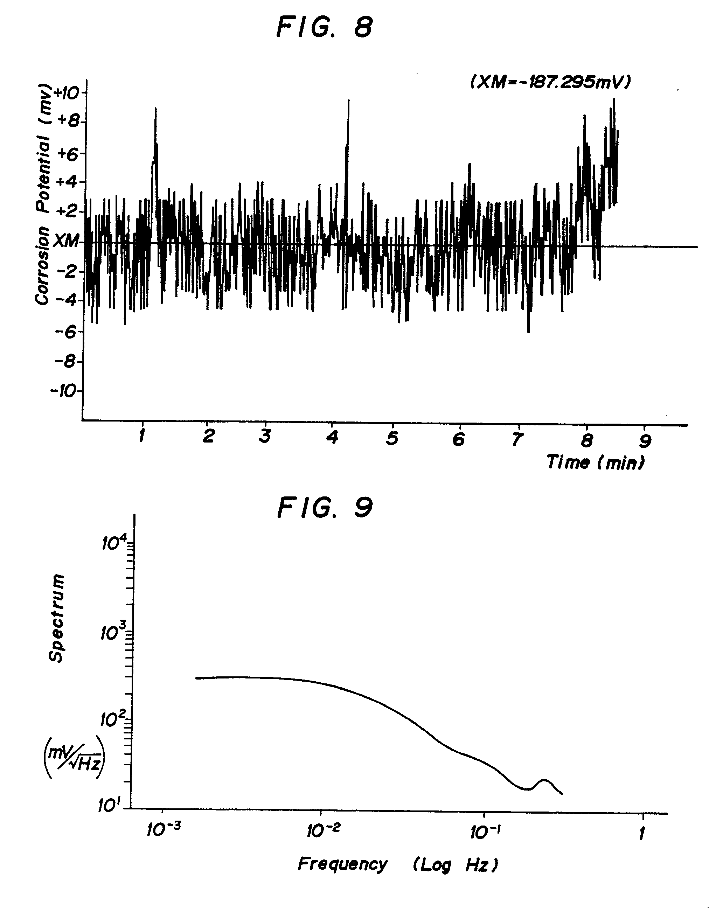

For comparison, a I I/4Cr-I/2 Mo steel subjected to de-embrittled was processed in the same manner as above. Changes in corrosion potential with time are shown in Fig. 8 ( maximum potential: -I75.824 mV; minimum potential: -I92.9I8 mV), and the results of spectrum analysis are shown in Fig. 9.

A charpy transition curve of each of the embrittled material and the de-embrittled material of the above I I/4 Cr-I/2 Mo steel was prepared to measure a shift of 50% fracture appearance transition temperature (Δ FATT). This shift of 50% fracture appearance transition temperature was 59° C.

EXAMPLE 5

The procedure of Example 4 was repeated with the exception that as the test piece, a 2 I/4Cr-I Mo steel used for I,000 hours at 482° C and its sound material were used. Fluctuation in corrosion potential of the embrittled material (test piece subjected to embrittlement) are shown in Fig. I0 (maximum potential: -2I4.896 mV; minimum potential: -229.548 mV), and the spectrum analysis results are shown in Fig. II. The changes in corrosion potential with time of the sound material is shown in Fig. I2 (maximum potential: -I55.067 mV; minimum potential: -I68.498 mV), and the spectrum analysis results are shown in Fig. I3.

A charpy transition curve of each of the embrittled material and the sound material of the above 2 I/4Cr-I Mo steel was prepared to measure a shift of 50% fracture appearance transition temperature (Δ FATT). The shift of 50% fracture appearance transition temperature was 76° C.

These spectrum analysis results show that has a high value in a high frequency region ($10^{-2}$ to $10^{-1}$) as compared with the sound material.

EXAMPLE 6

The procedure of Example 4 was repeated with the exception that the 2 I/4 Cr-I Mo steel used under various conditions was used as a test piece (A: I,000 hours at 482° C; B: 3,000 hours at 450° C; C: step cooling; D: I4 years at 330° C). The shift of fracture appearance transition temperature and the difference in power spectrum calculated by spectrum analysis (a difference in an integrated area under power spectrum and frequency diagram of the embrittled material and that of the de-embrittled material) are shown in Fig. I4.

## Claims

1. A method of determining a degree of deterioration of alloy steel embrittled in a high temperature atmosphere over a long period of time, comprising the steps of:
   - immersing a test piece of the alloy steel in an electrolyte solution;
   - measuring the potential of the alloy steel test piece against a reference electrode in said electrolyte solution thereby obtaining a first fluctuant electric potential signal;
   - deriving a first plot corresponding to amplitude of component frequencies of said first fluctuant electric potential signal;

   characterized by
   - measuring an area of said first plot within a determined range of component frequencies thereby obtaining a first measured area value;
   - immersing a non-deteriorated sound piece of alloy steel having the same composition as said test piece in said electrolyte solution;
   - measuring the potential of the non-deteriorated sound piece of alloy steel against said reference electrode in said electrolyte solution thereby obtaining a second fluctuant electric potential signal;
   - deriving a second plot corresponding to amplitude of component frequencies of said second fluctuant electric potential signal;
   - measuring an area of said second plot within said determined range of component frequencies thereby obtaining a second measured area value; and
   - determining a degree of deterioration of said test piece in accordance with the difference between the first and the second measured area values.

2. The method as claimed in claim 1, wherein the alloy steel is a chromium-molybdenum steel, a chromium-molybdenum-vanadium steel or a stainless steel.

## Revendications

1. Méthode de déterminer le degré de la dégradation d'un acier allié devenu fragile dans une atmosphère à température élevée pendant une longue période de temps, comprenant les pas de:
   - immerger dans une solution électrolyte une pièce à essayer en cet acier allié;
   - mesurer le potentiel de ladite pièce à essayer en acier allié vers une électrode de référence dans ladite solution électrolyte afin d'obtenir un premier signal de potentiel électrique fluctuant;

- dériver un premier enregistrement correspondant à l'amplitude de fréquences composées du premier signal de potentiel électrique fluctuant;

**caractérisée par**

- mesurer une aire dudit premier enregistrement dans une gamme déterminée de fréquences composées afin d'obtenir une première valeur d'aire mesurée;

- immerger dans ladite solution électrolyte une pièce à sonder non-détériorée en acier allié de la même composition que ladite pièce à essayer;

- mesurer le potentiel de ladite pièce à sonder non-détériorée en acier allié vers ladite électrode de référence dans ladite solution électrolyte afin d'obtenir un deuxième signal de potentiel électrique fluctuant;

- dériver un deuxième enregistrement correspondant à l'amplitude de fréquences composées du deuxième signal de potentiel électrique fluctuant;

- mesurer une aire dudit deuxième enregistrement dans ladite gamme déterminée de fréquences composées afin d'obtenir une deuxième valeur d'aire mesurée; et

- déterminer un degré de dégradation de ladite pièce à essayer en fonction de la différence entre la première et la deuxième valeur d'aire mesurée.

2. La méthode selon la revendication 1, ledit acier allié étant un acier au chrome-molybdène, un acier au chrome-molybdène-vanadium ou un acier inoxydable.

**Patentansprüche**

1. Verfahren zum Bestimmen des Grades der Schädigung von legiertem Stahl, der in einer Hochtemperaturatmosphäre über einen langen Zeitraum versprödet ist, welches die Schritte umfaßt:
   - Eintauchen eines Probestückes des legierten Stahles in eine Elektrolytlösung;
   - Messen des Potentials des Probestückes aus legiertem Stahl gegen eine Referenzelektrode in der Elektrolytlösung, so daß ein erstes fluktuierendes elektrisches Potentialsignal erhalten wird;
   - Ableiten einer ersten Aufzeichnung entsprechend der Amplitude von zusammengesetzten Frequenzen des ersten fluktuierenden elektrischen Potentialsignals;

**gekennzeichnet durch**

- Ausmessen einer Fläche der ersten Aufzeichnung in einem bestimmten Bereich zusammengesetzter Frequenzen, so daß ein erster gemessener Flächenwert erhalten wird;

- Eintauchen eines nichtgeschädigten Sondenstückes aus legiertem Stahl mit derselben Zusammensetzung wie das Probestück in die Elektrolytlösung;

- Messen des Potentials des nichtgeschädigten Sondenstückes aus legiertem Stahl gegen die Referenzelektrode in der Elektrolytlösung, so daß ein zweites fluktuierendes elektrisches Potentialsignal erhalten wird;

- Ableiten einer zweiten Aufzeichnung entsprechend der Amplitude von zusammengesetzten Frequenzen des zweiten fluktuierenden elektrischen Potentialsignals;

- Ausmessen einer Fläche der zweiten Aufzeichnung in dem bestimmten Bereich zusammengesetzter Frequenzen, so daß ein zweiter gemessener Flächenwert erhalten wird; und

- Bestimmen eines Grades der Schädigung des Probestückes in Abhängigkeit von der Differenz zwischen dem ersten und dem zweiten Flächenwert.

2. Verfahren nach Anspruch 1, bei dem der legierte Stahl ein ChromMolybdän-Stahl, ein Chrom-Molybdän-Vanadium-Stahl oder ein nichtrostender Stahl ist.

FIG. I

FIG. 2

EP 0 228 644 B1

FIG. 3

## FIG. 4

## FIG. 5

## FIG. 6

(XM = -208.421mV)

## FIG. 7

FIG. 8

FIG. 9

# FIG. 10

(XM= -222.487mV)

# FIG. 11

## FIG. 12

(XM = -162.164 mV)

## FIG. 13

# FIG. 14